# EUROPEAN PATENT APPLICATION

(11) **EP 3 144 547 A1**
(43) Date of publication of application: **22.03.2017**
(21) Application number: 16152221.4
(22) Date of filing: 21.01.2016
(51) Int. Cl.: F16B 39/282, F16B 43/00

(54) **FASTENING STRUCTURE**

(30) Priority: 18.09.2015 JP 2015004779 U
(71) Applicant: Nagashima Manufacturing Co., Ltd., Kahoku-gun, Ishikawa (JP)
(72) Inventor: NAGASHIMA, Takeshi, KAHOKU-GUN, Ishikawa (JP); HIRASAWA, Toru, KAHOKU-GUN, Ishikawa (JP); KAMEDA, Kazushige, KAHOKU-GUN, Ishikawa (JP); NAKAI, Tetsuya, KAHOKU-GUN, Ishikawa (JP); MORISAWA, Shinsuke, KAHOKU-GUN, Ishikawa (JP); SUZUKI, Yui, KAHOKU-GUN, Ishikawa (JP); NAKAHARA, Ryoya, KAHOKU-GUN, Ishikawa (JP); TAYA, Yuto, KAHOKU-GUN, Ishikawa (JP); MATSUDA, Yuki, KAHOKU-GUN, Ishikawa (JP); MORITA, Mariko, KAHOKU-GUN, Ishikawa (JP); KAMATA, Hiromi, KAHOKU-GUN, Ishikawa (JP)
(74) Representative: Lenzing Gerber Stute

(57) **Abstract**

A fastening structure includes a bolt (12), a nut (13) screwed onto the bolt to fasten a target part (11a), and a washer (14) sandwiched between the target part and the nut. The washer is formed in a disk shape having a hole in which the bolt is inserted. The nut has a main body (17) formed in a hexagonal pillar shape having a hole (16) in which the bolt is inserted and a disk portion (18) extending from an axial end of the main body. Protrusions (20) are circumferentially distributed on a face of the disk portion, the face being on the side opposite the main body. The protrusions bite into a nut-side face of the washer (14) to form meshed portions by screwing together the bolt and the nut.

## Description

### BACKGROUND

### Technical Field

The present invention relates to a fastening structure for fastening a target part.

### Background of the Art

Conventional tubular joints for connecting and fixing tubes used for liquid or gas transfer are known. Most of known types of tubular joints use bolts, nuts, and disks (washers) as means for fastening. Firmness and durability are more required of fixing of tubes than easy detachability. It is important that the fixed tubes maintain the engaged state without being affected by the change in temperature inside and outside the tubes and earthquakes.

From the aforementioned view point, the applicant has searched out patent documents which are JP 4-10114 Y, JP 57-190120 Y, and JP 55-100710 Y. JP 4-10114 Y discusses a fastening structure using a screw (bolt), a disk (washer), and a nut. In the structure, the same number of lead waves are provided on a seating face of the anti-loosening nut in which the screw is inserted and the face of the washer facing the seating face of the nut.

JP 57-190120 Y discloses a bolt fastening structure in which a bolt shaft inserted in a long hole of a fixture plate is fastened at a predetermined position with a nut via a washer. The long hole is formed in a shape having a plurality of wide sections and narrow sections continuously arranged in the longitudinal direction. The narrow section has a width slightly larger than the size of the bolt to allow the bolt shaft to move. A ring that plastically or elastically deforms is sandwiched between the opposing faces of the fixture plate and the washer.

JP 55-100710 Y discloses a disk (washer) for a friction-joint bolt, with which an axial force can be controlled. The portion of the washer that makes contact with a nut has a curved shape projecting toward the nut. The material and the thickness of the projecting portion are designed so that the disk deforms by fastening the nut at a predetermined axial force.

The invention disclosed in JP 4-10114 Y can restrict the relative rotation between the screw and the washer as well as between the nut and the washer, but disadvantageously cannot restrict the relative rotation between the washer and the target part. The invention disclosed in JP 57-190120 Y cannot prevent sliding of the nut against the washer. The invention disclosed in JP 55-100710 Y disadvantageously cannot restrict the relative rotation between the screw (bolt) and the nut.

### SUMMARY

The present invention has been made to solve the conventional problem described above. An object of the present invention is to provide a fastening structure that can surely prevent loosening of a nut and a washer.

In order to achieve the above object, according to a first aspect of the invention, there is provided a fastening structure including: a bolt; a nut configured to be screwed onto the bolt to fasten a target part; and a washer sandwiched between the target part and the nut, wherein the washer is formed in a disk shape having a hole in which the bolt is inserted, the nut has a main body formed in a hexagonal pillar shape having a hole in which the bolt is inserted, and a disk portion extending from an axial end of the main body, protrusions are circumferentially distributed on a face of the disk portion, the face being on a side opposite the main body, and the protrusions bite into a nut-side face of the washer to form meshed portions by screwing together the bolt and the nut.

When the bolt and the nut are screwed together with the washer sandwiched between the target part and the nut, the target part is fastened with the protrusions biting into a nut-side face of the washer to form meshed portions.

According to a second aspect of the invention, the disk portion is formed in a disk shape having a diameter approximately identical to an outer diameter of the washer.

Thus, when the bolt and the nut are screwed together with the washer sandwiched between the target part and the nut, the target part is fastened with the protrusions biting into the nut-side face of the washer in most of the area to form meshed portions.

According to a third aspect of the invention, the washer is made of a metal having an electrical potential close to a metal forming the nut.

According to a fourth aspect of the invention, the nut is made of a stainless steel and the washer is made of a brass.

According to a fifth aspect of the invention, the washer has a silhouette of a kinked line in a side view and elastically deforms by screwing together the bolt and the nut.

Thus, when the bolt and the nut are screwed together with the washer sandwiched between the target part and the nut, the washer elastically deforms, and the target part is fastened with a force caused by the elastic deformation of the washer acting on the target part and the nut.

The fastening structure according to the first and second aspects is such that, by screwing together the bolt and the nut with the washer sandwiched between the target part and the nut, the protrusions bite into the nut-side face of the washer to form meshed portions. The meshed portion has a large contact area between the nut and the washer and thus creates a large frictional force between the nut and the washer. Therefore, the relative rotation between the nut and the washer can effectively be restricted. In this manner, a fastening structure that can surely prevent loosening of the nut and the washer is provided.

In particular, the fastening structure according to the second aspect is such that, by screwing together the bolt and the nut with the washer sandwiched between the target part and the nut, the protrusions bite into the nut-side face of the washer in most of the area to form meshed portions. In this manner, the contact area between the nut and the washer is further increased, and thus the relative rotation between the nut and the washer is further effectively be restricted.

The fastening structure according to the third and fourth aspects is such that the washer is made of a metal having an electrical potential close to the metal forming the nut, so that the chances of corrosion caused by the difference in electrical potential between different metals can be reduced when the bolt and the nut are screwed together with the washer sandwiched between the target part and the nut.

In particular, the fastening structure according to the fourth aspect is such that the nut is made of a stainless steel and the washer is made of a brass, so that the protrusions provided on the nut made of the stainless steel bite into the nut-side face of the washer made of the brass, which is softer than the stainless steel and has an electrical potential close to the stainless steel, to form meshed portions when the bolt and the nut are screwed together with the washer sandwiched between the target part and the nut. Consequently, the chances of corrosion caused by the difference in electrical potential between different metals is reduced, and a fastening structure that can surely prevent loosening of the nut and the washer is provided.

The fastening structure according to the fifth aspect is such that, by screwing together the bolt and the nut with the washer sandwiched between the target part and the nut, the washer elastically deforms, and the target part is fastened with a force caused by the elastic deformation of the washer acting on the target part and the nut. Thus, a large frictional force acts between the nut and the washer as well as between the washer and the target part, thereby effectively restricting the relative rotation between the nut and the washer as well as between the washer and the target part.

### BRIEF DESCRIPTION OF DRAWINGS

FIG. 1 is an exploded perspective view illustrating one embodiment of a fastening structure according to the present invention;
FIG. 2 is a side view of one embodiment of the fastening structure according to the present invention where a target part is fastened;
FIG. 3 is a perspective view of one embodiment of the fastening structure according to the present invention viewed from the side opposite the main body of a nut; and
FIG. 4 is an enlarged sectional view of one embodiment of the fastening structure according to the present invention where meshed portions are formed when a target part is fastened.

### DETAILED DESCRIPTION

An embodiment according to the present invention will be described with reference to the attached drawings.

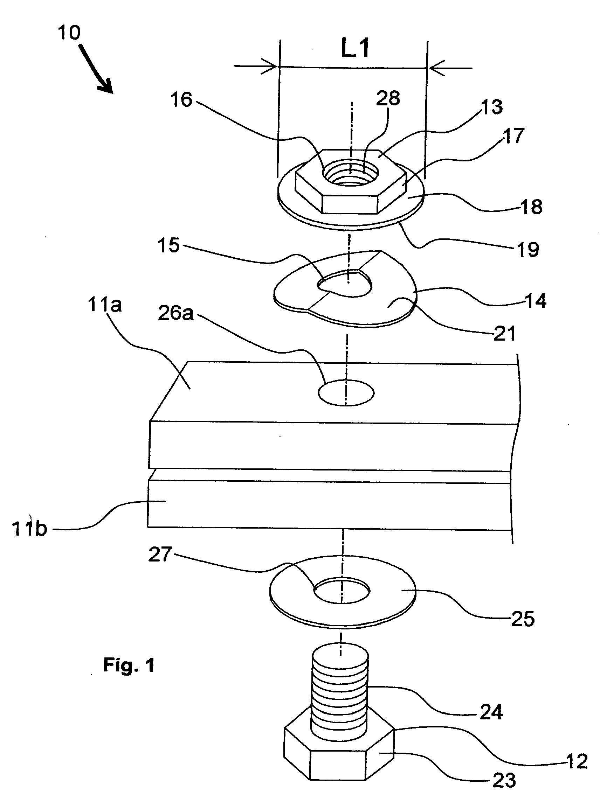

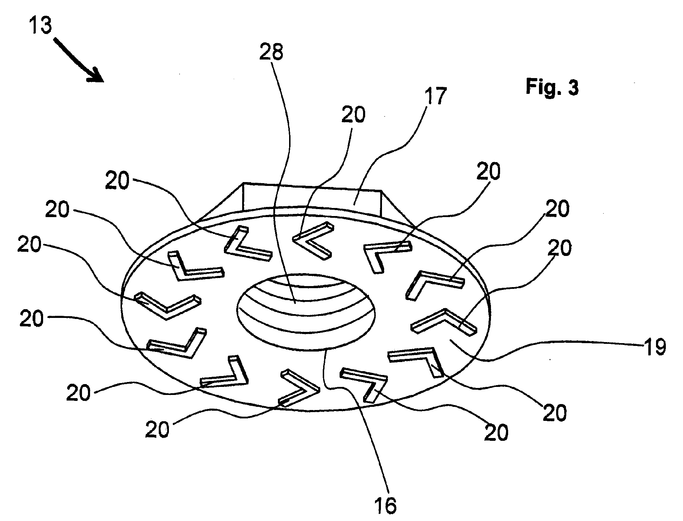

As illustrated in FIGS. 1 to 3, a fastening structure 10 according to one embodiment of the present invention includes a bolt 12 having a head portion 23 formed in a hexagonal pillar shape and a shaft portion 24 that extends from an end of the head portion 23 in the axial direction to form a substantially column shape having a thread formed on the outer periphery, a nut 13 that is screwed onto the bolt 12 to fasten a pair of target parts 11a and 11b each formed in a rectangular shape in a plan view and respectively provided with holes 26a and 26b, a washer 14 sandwiched between the target part 11a and the nut 13, and a washer 25 sandwiched between the target part 11b and the bolt 12.

As illustrated in FIGS. 1 to 3, the washers 14 and 25 according to the embodiment are each formed in a disk shape and respectively provided with holes 15 and 27 in which the bolt 12 is inserted.

As illustrated in FIGS. 1 to 3, the nut 13 according to the embodiment has a main body 17 that is formed in a hexagonal pillar shape having a hole 16 in which the bolt 12 is inserted and a disk portion 18 extending from an axial end of the main body 17. Protrusions 20, 20 ... each having a shape of a kinked line are circumferentially distributed on a face 19 of the disk portion 18, which face 19 being on the side opposite the main body.

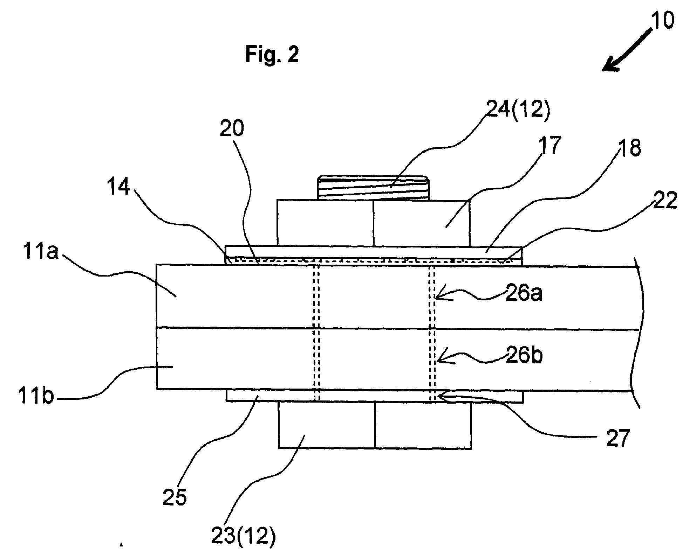

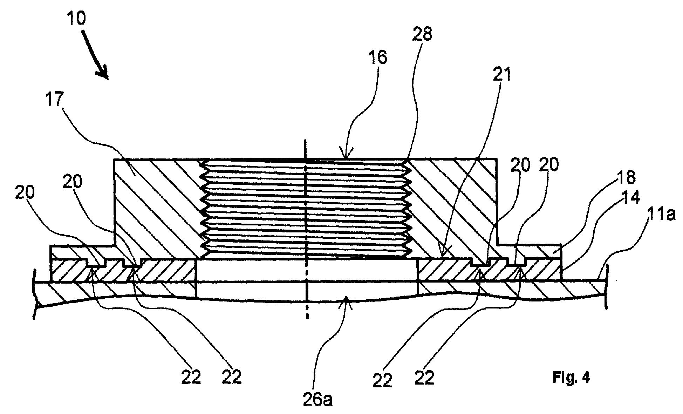

As illustrated in FIGS. 2 and 4, when the bolt 12 and the nut 13 according to the embodiment are screwed together, the protrusions 20, 20 ... bite into the nut-side face 21 of the washer 14 to form meshed portions 22, 22 ....

As illustrated in FIG. 1, the disk portion 18 according to the embodiment is formed in a disk shape having dimension L1 approximately identical to the outer diameter of the washer 14.

As illustrated in FIG. 4, a thread 28 that screws with the thread of the shaft portion 24 of the bolt 12 is formed on the inner circumferential face of the hole 16 according to the embodiment.

The bolt 12, the nut 13, and the washer 25 according to the embodiment are each made of a stainless steel. The washer 14 is made of a brass, which is softer than stainless steel and has an electrical potential close to stainless steel.

As illustrated in FIGS. 1, 2, and 4, the washer 14 according to the embodiment has a silhouette of a kinked line in a side view and elastically deforms by screwing together the bolt 12 and the nut 13 to make contact with the nut 13 and the target part 11a.

The effect of the fastening structure 10 according to the embodiment will be described.

As illustrated in FIG. 1, the fastening structure 10 according to the embodiment is configured to fasten a pair of target parts 11a and 11b by inserting the bolt 12 in the hole 27 of the washer 25, the hole 26b of the target part 11b, the hole 26a of the target part 11a, and the hole 15 of the washer 14 in this order, and screwing the bolt 12 into the thread 28 provided in the hole 16 of the nut 13.

Here, the washer 14 is sandwiched between the target part 11a and the nut 13, and the protrusions 20, 20 ... are bitten into the nut-side face 21 of the washer 14 to form the meshed portions 22, 22 .... The contact area between the nut 13 and the washer 14 has been increased by the meshed portions 22, 22 ... and thereby a large frictional force acts between the nut 13 and the washer 14.

In this manner, the relative rotation between the nut 13 and the washer 14 can effectively be restricted. As a result, the fastening structure 10 that can surely prevent loosening of the nut 13 and the washer 14 is provided.

In particular, as illustrated in FIG. 1, the disk portion 18 according to the embodiment is formed in a disk shape having the diameter L1 approximately identical to the outer diameter of the washer 14. Accordingly, when the bolt 12 and the washer 13 are screwed together with the washer 14 sandwiched between the target part 11a and the nut 13, the protrusions 20, 20 ... bite into the nut-side face 21 of the washer 14 in most of the area to form the meshed portion 22, thereby increasing the contact area between the nut 13 and the washer 14. As a result, the relative rotation between the nut 13 and the washer 14 can further effectively be restricted.

The fastening structure 10 according to the embodiment is such that the nut 13 is made of a stainless steel, whereas the washer 14 is made of a brass, which is softer than stainless steel and has an electrical potential close to stainless steel. Therefore, when the bolt 12 and the washer 13 are screwed together with the washer 14 sandwiched between the target part 11a and the nut 13, the protrusions 20, 20 ... provided on the nut 13 made of a stainless steel bite into the nut-side face 21 of the washer 14, which is made of a brass softer than stainless steel and having an electrical potential close to stainless steel, to form the meshed portions 22, 22 ....

As a result, the chances of corrosion caused by the difference in electrical potential between different metals can be reduced, and the fastening structure 10 that can surely prevent loosening of the nut 13 and the washer 14 is provided.

As illustrated in FIGS. 1, 2, and 4, the washer 14 according to the embodiment has a silhouette of a kinked line in a side view and elastically deforms by screwing together the bolt 12 and the nut 13 to make contact with the nut 13 and the target part 11a.

Therefore, when the bolt 12 and the washer 13 are screwed together with the washer 14 sandwiched between the target part 11a and the nut 13, the washer 14 elastically deforms and the target parts 11a and 11b are fastened with a force caused by the elastic deformation of the washer 14 acting on the target part 11a and the nut 13. Thus, a large frictional force is produced between the nut 13 and the washer 14 as well as between the washer 14 and the target part 11a, so that the relative rotation between the nut 13 and the washer 14 as well as between the washer 14 and the target part 11a can effectively be restricted.

The embodiment is described by way of example such that the bolt 12, the nut 13, the washer 25 are each made of a stainless steel and the washer 14 is made of a brass, which is softer than stainless steel and has an electrical potential close to stainless steel. The configuration of the embodiment is not limited to the configuration described above.

The washer 14 according to the embodiment is described by way of example to have a silhouette of a kinked line in a side view and elastically deforms by screwing together the bolt 12 and the nut 13. The configuration of the washer 14 is not limited to the configuration described above.

The present invention can widely be used for a fastening structure for fastening a target part and is industrially applicable.

## Claims

1. A fastening structure comprising:
a bolt;
a nut configured to be screwed onto the bolt to fasten a target part; and
a washer sandwiched between the target part and the nut,
wherein
the washer is formed in a disk shape having a hole in which the bolt is inserted,
the nut has a main body formed in a hexagonal pillar shape having a hole in which the bolt is inserted, and a disk portion extending from an axial end of the main body,
protrusions are circumferentially distributed on a face of the disk portion, the face being on a side opposite the main body, and
the protrusions bite into a nut-side face of the washer to form meshed portions by screwing together the bolt and the nut.

2. The fastening structure according to claim 1, wherein
the disk portion is formed in a disk shape having a diameter approximately identical to an outer diameter of the washer.

3. The fastening structure according to claim 2, wherein
the washer is made of a metal having an electrical potential close to a metal forming the nut.

4. The fastening structure according to claim 3, wherein
the nut is made of a stainless steel and the washer is made of a brass.

5. The fastening structure according to claim 1, wherein
the washer has a silhouette of a kinked line in a side view and elastically deforms by screwing together the bolt and the nut.
